(19)

Europäisches
Patentamt
European
Patent Office
Office européen
des brevets

(11) **EP 4 001 348 A1**

(12) **EUROPEAN PATENT APPLICATION**

(43) Date of publication:
**25.05.2022 Bulletin 2022/21**

(21) Application number: **21208152.5**

(22) Date of filing: **15.11.2021**

(51) International Patent Classification (IPC):
**C08J 5/18** *(2006.01)*      **H01M 10/42** *(2006.01)*
**H01M 50/417** *(2021.01)*      **H01M 50/489** *(2021.01)*
**H01M 50/491** *(2021.01)*

(52) Cooperative Patent Classification (CPC):
**C08J 5/18; H01M 10/4235; H01M 50/417;
H01M 50/489; H01M 50/491**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.11.2020 JP 2020193152**

(71) Applicant: **Toray Industries, Inc.
Tokyo 103-8666 (JP)**

(72) Inventors:
• **SHIMOKAWATOKO, Haruka
Nasushiobara-shi, Tochigi, 3292763 (JP)**
• **NISHIMURA, Naoya
Nasushiobara-shi, Tochigi, 3292763 (JP)**
• **KUMA, Takuya
Nasushiobara-shi, Tochigi, 3292763 (JP)**

(74) Representative: **Hoefer & Partner Patentanwälte
mbB
Pilgersheimer Straße 20
81543 München (DE)**

(54) **POLYOLEFIN MICROPOROUS MEMBRANE, BATTERY SEPARATOR, AND SECONDARY BATTERY**

(57) An object of the invention is to provide a polyolefin microporous membrane that provides particularly excellent safety when used as a battery separator. The object is achieved by providing a polyolefin microporous membrane that shows an average degree of in-plane molecular orientation of not less than 2.9 when analyzed by Raman spectroscopy and exhibits a melting peak(s) occurring at a temperature of not lower than 140°C, which occupies not less than 5% and not more than 40% of the area of all the melting peak(s), when measured on a differential scanning calorimeter (DSC).

EP 4 001 348 A1

**Description**

Technical Field

The present invention relates to a polyolefin microporous membrane, a battery separator, and a secondary battery.

Background Art

Polyolefin microporous membranes are used as filters, fuel cell separators, capacitor separators, or the like and are suitably used as separators for lithium ion batteries that are widely used particularly in notebook personal computers, smartphones, electric vehicles, and the like. It is understood that the high mechanical strength and excellent shutdown feature of the polyolefin microporous membranes allows such uses. In particular, safety requirements for separators in lithium ion secondary batteries become more stringent in recent years as efforts are directed to development of batteries with a bigger size, a higher energy density, a higher capacity, and a higher output power, mainly for vehicle use.

The shutdown (SD) property refers to the ability of a separator to melt in a battery for pore-blocking, which prevents the electrochemical reaction in the battery to proceed and thereby ensures the safety of the battery, when the battery inside is overheated due to overcharging. In general, a lower shutdown temperature is considered as indicating higher safety effect. Additionally, the component (*i.e.,* separator) has become thinner and thinner as the battery capacity is increased, and is required to have higher mechanical strength for preventing short-circuit formation in the battery winding process or due to the presence of foreign matter in a battery, as well as to have a reduced resistance for further improvement of output performance.

Patent Literature 1 describes a technique to produce a membrane from polyethylene of relatively high molecular weight by sequential stretching as an example of a method of providing a microporous membrane with high permeability and high mechanical strength as well as with high safety. High permeability and high mechanical strength are achieved in the obtained microporous membrane.

Patent Literature 2 discloses a microporous polyethylene membrane comprising a high density polyethylene polymer with a molecular weight of less than 10,000 at a ratio of 20% or higher, whose pore-blocking temperature Tf is not higher than 134°C and the relationship of the Tf with the film melting point Tm is represented by the following inequation: Tm - Tf > 0; the microporous polyethylene membrane is described to have an ability to protect a battery from short-circuit and overcharge when the membrane is used as a separator for the battery.

Citation List

Patent Literature

Patent Literature 1: JP 2009-108323 A
Patent Literature 2: JP 2000-204188 A

Summary of Invention

Technical Problem

In one technique, as described above, orientation control mediated by increase of draw ratio or use of a high-molecular-weight polyethylene polymer is employed to increase the mechanical strength. In the other technique, use of a low-molecular-weight material in a microporous membrane to increase the ratio of a pore-blocking component is mainly employed to decrease the shutdown temperature. In membranes produced by the technique described in Patent Literature 1, however, the shutdown (pore-blocking) temperature remains high though both high mechanical strength and high permeability are provided. In membranes produced by the technique described in Patent Literature 2, on the other hand, the pore-blocking temperature is satisfactory due to the abundance of a low-molecular-weight component but the mechanical strength is supposed to be lower than that currently required for battery separators. As seen above, a trade-off is made between the shutdown feature and the mechanical strength or the permeability in a microporous membrane, and both properties have hardly been achieved at high levels.

An object of the present invention is to provide a polyolefin microporous membrane with high mechanical strength and low electrical resistance as well as with a low-temperature shutdown feature, wherein the polyolefin microporous membrane provides excellent safety and high output performance when used as a battery separator.

Solution to Problem

The inventors studied hard to solve the above-described problem and consequently found that a polyolefin microporous membrane according to the present invention can provide a lower shutdown temperature, a higher mechanical strength, and a lower electrical resistance as compared with those of conventional polyolefin microporous membranes.

That is, one aspect of the present invention is a polyolefin microporous membrane showing an average degree of in-plane molecular orientation of not less than 2.9 when analyzed by Raman spectroscopy and exhibiting a melting peak(s) occurring at a temperature of not lower than 140°C, which occupies not less than 5% and not more than 40% of the area of all the melting peak(s), when measured on a differential scanning calorimeter (DSC).

Additionally, another aspect of the present invention is a battery separator in which the polyolefin microporous membrane of the invention is used.

Additionally, still another aspect of the present invention is a secondary battery in which the battery separator of the invention is used.

Advantageous Effects of Invention

The polyolefin microporous membrane of the invention has an excellent shutdown feature while keeping high mechanical strength and low electrical resistance. Thus, the polyolefin microporous membrane of the invention provides excellent safety and high output performance when used as a battery separator, and is therefore suitable to be used, for keeping safety, as a battery separator for secondary batteries requiring a high energy density, a high capacity, and high output power, such as those for electric vehicles and the like.

Description of Embodiments

Embodiments of the present invention will be described below.

In the present invention, a direction parallel to that of forming a polyolefin microporous membrane is called film-forming direction, machine direction, or MD direction, and the direction orthogonal to the film-forming direction in the plane of a polyolefin microporous membrane is called transverse direction or TD direction. Additionally, in the present invention, a endothermic curve by differential scanning calorimeter (DSC) is also called melting curve or melting peak, the temperature of the top of the melting peak is called peak top temperature, and the endothermic energy amount at the peak top temperature is called intensity of the peak top.

Preferably, the polyolefin microporous membrane of the invention contains at least one polyethylene-based resin.

In the present invention, the polyethylene-based resin can be a homopolymer of ethylene or may be a copolymer containing ethylene and another $\alpha$-olefin for decreasing the melting point, as described below. Examples of the $\alpha$-olefin include propylene, butene-1, hexene-1, pentene-1, 4-methylpentene-1, octene, vinyl acetate, methyl methacrylate, and styrene. The presence or type of the $\alpha$-olefin can be determined by C$^{13}$-NMR spectroscopy.

In the present invention, the polyethylene-based resin preferably has a weight-average molecular weight Mw of not less than $5.0 \times 10^5$, more preferably not less than $7.0 \times 10^5$, still more preferably not less than $1.0 \times 10^6$, when measured by high-temperature gel permeation chromatography (GPC). Additionally, the polyethylene-based resin preferably has a weight-average molecular weight Mw of not more than $2.0 \times 10^6$, more preferably not more than $1.5 \times 10^6$. When the Mw falls within the ranges described above, the drawing stress is efficiently transmitted so that the unstretched area is reduced, which prevents excessive rise of shutdown temperature and also enables improvement of mechanical strength and reduction of electrical resistance.

In the present invention, the polyethylene-based resin preferably has a melting point of 135°C or lower, more preferably 134°C or lower, when measured by differential scanning calorimeter (DSC). Additionally, the polyethylene-based resin preferably has a melting point of 120°C or higher, more preferably 125°C or higher. When the melting point falls within the ranges described above, the polyethylene-based resin in the unstretched structure can have such a low melting point that the thermal stability can be controlled within an appropriate range in a polyolefin microporous membrane formed from the resin, which eventually enables low-temperature shutdown and reduction of electrical resistance.

In the polyolefin microporous membrane of the invention, the fraction of polyethylene molecules with a molecular weight of not more than $3.5 \times 10^5$ preferably accounts for not less than 30% by mass and less than 50% by mass according to the molecular mass distribution of polyethylene components measured by gel permeation chromatography (GPC). When the fraction of polyethylene molecules with a molecular weight of not more than $3.5 \times 10^5$ falls within the range described above, the drawing stress is easily and efficiently transmitted so that the unstretched area as a cause of increased electrical resistance can be reduced, which enables reduction of electrical resistance and improvement of mechanical strength. The fraction of polyethylene molecules with a molecular weight of not more than $3.5 \times 10^5$ more

preferably accounts for not less than 35% by mass, still more preferably not less than 40% by mass. Additionally, the fraction of polyethylene molecules with a molecular weight of not more than $3.5 \times 10^5$ more preferably accounts for not more than 48% by mass.

To keep the fraction of polyethylene molecules with a molecular weight of not more than $3.5 \times 10^5$ within the ranges described above, it is desirable to employ the composition of materials and the conditions of membrane formation for the formation of the polyolefin microporous membrane as described below.

In the polyolefin microporous membrane of the invention, the fraction of polyethylene molecules with a molecular weight of not less than $9.0 \times 10^5$ preferably accounts for not less than 30% by mass and not more than 50% by mass according to the molecular mass distribution of polyethylene components measured by gel permeation chromatography (GPC). When the fraction of polyethylene molecules with a molecular weight of not less than $9.0 \times 10^5$ falls within the range described above, the polyolefin microporous membrane abundantly contains molecules capable of efficiently transmitting the drawing stress so that the unstretched area as a cause of increased electrical resistance is hard to be formed, which enables improvement of mechanical strength as well as reduction of electrical resistance. More preferably, the fraction of polyethylene molecules with a molecular weight of not less than $9.0 \times 10^5$ accounts for not less than 32% by mass, still more preferably not less than 34% by mass. Still more preferably, the upper limit of the fraction of polyethylene molecules with a molecular weight of not less than $9.0 \times 10^5$ accounts for not more than 40% by mass.

To keep the fraction of polyethylene molecules with a molecular weight of not less than $9.0 \times 10^5$ in a polyolefin microporous membrane within the ranges described above, it is desirable to employ the composition of materials and the conditions of membrane formation for the formation of the polyolefin microporous membrane as described below.

For the polyethylene-based resin in the present invention, the ratio of crystals to melt at or above a high temperature (hereinafter referred to as "the high-temperature ratio of crystals to melt H") preferably accounts for not less than 0.1% and not more than 6.0%, more preferably not less than 0.1% and not more than 4.5%, and still more preferably not less than 0.1% and not more than 3.5%, where the temperature is the higher of the temperatures on each side of a peak which are corresponding to half the intensity of the peak top of the melting peak observed in the analysis with a differential scanning calorimeter (DSC). The high-temperature ratio of crystals to melt H is indicative of the recrystallization ability of a polymer, and a peak or a shoulder resulting from the reorganization of crystals may be observed at a temperature higher than the peak top temperature in a polyethylene-based resin with high recrystallization ability. When the high-temperature ratio of crystals to melt H falls within the ranges described above, crystals with high melting points, which are easily formed by recrystallization, is easily prevented from forming in a membrane stretching process or a subsequent crystal stabilization process so that the thermal stability can be controlled within an appropriate range, which enables low-temperature shutdown.

The concentration of the polyethylene-based resin in the polyolefin microporous membrane is preferably not less than 50%, more preferably not less than 60%.

In the polyolefin microporous membrane of the invention, the limiting viscosity of the resin is preferably not less than 3.0 dL/g. The limiting viscosity of a polyolefin microporous membrane is calculated by dissolving the polyolefin microporous membrane in decalin at different concentrations, using the solution with each concentration at 135°C to determine the reduced viscosity, and extrapolating the reduced viscosity to zero concentration. When the limiting viscosity of the polyolefin microporous membrane is not less than 3.0 dL/g, preferably not less than 4.0 dL/g, more preferably not less than 5.0 dL/g, and still more preferably not less than 5.5 dL/g, the polyolefin microporous membrane can have lower electrical resistance and higher mechanical strength due to the presence of more strongly entangled molecular chains. When the limiting viscosity of the polyolefin microporous membrane is not more than 10 dL/g, and preferably not more than 9 dL/g, the formability of the polyolefin microporous membrane is increased. To keep the limiting viscosity of the polyolefin microporous membrane within the ranges described above, it is desirable to limit the composition of materials for the formation of the polyolefin microporous membrane to the ranges described below.

The polyolefin microporous membrane of the invention may contain various additives, such as an antioxidant, a thermal stabilizer, an antistatic agent, an ultraviolet absorber, an antiblocking agent, and a filler, as long as the effects of the present invention are not impaired.

In particular, an antioxidant is preferably added for the purpose of preventing the oxidative degradation of the polyolefin-based resin due to the thermal history. As the antioxidant, at least one antioxidant selected from the group consisting of 2,6-di-*t*-butyl-*p*-cresol (BHT, molecular weight: 220.4), 1,3,5-trimethyl-2,4,6-tris(3,5-di*t*-butyl-4-hydroxybenzyl)benzene (for example, Irganox® 1330 manufactured by BASF, molecular weight: 775.2), tetrakis[methylene-3(3,5-di-*t*-butyl-4-hydroxyphenyl)propionate]methane (for example, Irganox® 1010 manufactured by BASF, molecular weight: 1177.7), and the like is preferably used.

The polyolefin microporous membrane of the invention shows an average degree of in-plane molecular orientation of not less than 2.9 when analyzed by Raman spectroscopy.

The average degree of in-plane molecular orientation in the polyolefin microporous membrane analyzed by Raman spectroscopy is the average of the I values of spectra measured 24 times by Raman spectroscopy, where the I values are calculated according to the following formula and the spectra are measured every 15 degrees from 0° to 345° when the MD direction is defined as the zero degree orientation:

$$I = I_{1130} / I_{1063};$$

I: degree of molecular orientation;
$I_{1130}$: peak intensity at 1130 cm$^{-1}$;
$I_{1063}$: peak intensity at 1060 cm$^{-1}$.

When the degree of in-plane molecular orientation is not less than 2.9, preferably not less than 3.0, more preferably not less than 3.2, and still more preferably not less than 3.3, the molecular chains are efficiently oriented in the in-plane direction, which enables improvement of mechanical strength and reduction of electrical resistance resulting from the decreased unstretched area in the polyolefin microporous membrane.

Additionally, when the degree of in-plane molecular orientation is not more than 4.0, more preferably not more than 3.7, excessive molecular orientation is suppressed in the polyolefin microporous membrane, which can prevent the shutdown feature from deteriorating due to the presence of excessively entangled molecular chains.

To keep the degree of in-plane molecular orientation within the ranges described above, it is desirable to limit the composition of materials for the formation of the polyolefin microporous membrane to the ranges described below and to restrict the stretching and heat setting conditions for the formation of the polyolefin microporous membrane to the ranges described below.

In the polyolefin microporous membrane of the invention, the area ratio S of a melting peak(s) occurring at a temperature of not lower than 140°C to all the melting peak(s) accounts for not less than 5% and not more than 40% when measured by a differential scanning calorimeter (DSC).

The area of melting peaks in the polyolefin microporous membrane is measured by a differential scanning calorimeter (DSC) in accordance with JIS K 7121: 2012. The area ratio S of a melting peak(s) occurring at a temperature of not lower than 140°C to all the melting peak(s) is calculated according to the following formula:

$$S = (S_{140} / S_{all}) \times 100;$$

S: area ratio of a melting peak(s) occurring at a temperature of not lower than 140°C to all the melting peak(s) (%);
$S_{140}$: area of a melting peak(s) occurring at a temperature of not lower than 140°C;
$S_{a11}$: area of all the melting peak(s).

When the S as described above is not less than 5%, preferably not less than 8%, and more preferably not less than 10%, the polyolefin microporous membrane rarely has collapsed pores but maintains low electrical resistance. Additionally, when the S as described above is not more than 40%, preferably not more than 37%, more preferably not more than 35%, and still more preferably not more than 30%, formation of crystals with high melting points, which may prevent shutdown, is reduced so that the polyolefin microporous membrane can put its shutdown feature into practice at low temperatures.

To keep the S as described above within the ranges described above, it is desirable to limit the composition of materials for the formation of the polyolefin microporous membrane to the ranges described below and to restrict the stretching and heat setting conditions for the formation of the polyolefin microporous membrane to the ranges described below.

In the polyolefin microporous membrane of the invention, the peak top temperature Tmi is preferably observed at not lower than 130°C and not higher than 140°C in the melting curve during the first heating step by a differential scanning calorimeter (DSC). The Tmi value indicates the melting point of crystals in the polyolefin microporous membrane. When the Tmi is not lower than 130°C, more preferably not lower than 132°C, and still more preferably not lower than 135°C, the polyolefin microporous membrane can prevent the electrical resistance from increasing due to the presence of collapsed micropores. Additionally, when the Tmi is not higher than 140°C, more preferably not higher than 138°C, and still more preferably not higher than 137°C, thermal shutdown at lower temperatures is enabled.

The melting curve as determined by a differential scanning calorimeter (DSC) is obtained by a measurement method in accordance with JIS K 7121: 2012.

To keep the Tmi within the ranges described above, it is desirable to limit the composition of materials and the conditions of membrane formation for the formation of the polyolefin microporous membrane to the ranges described below.

In the polyolefin microporous membrane of the invention, the peak top temperature $Tm_2$ is preferably observed at not higher than 137.5°C in the melting curve during the second heating step by a differential scanning calorimeter

(DSC). The $Tm_2$ value indicates the crystallization ability of the polyolefin microporous membrane. When the $Tm_2$ is not higher than 137.5°C, more preferably not higher than 137.3°C, and still more preferably not higher than 137.0°C, the polyolefin microporous membrane already has a low melting point before being stretched, which enables low-temperature shutdown. Additionally, when the $Tm_2$ is not lower than 130°C, and more preferably not lower than 132°C, the polyolefin microporous membrane can prevent the electrical resistance from increasing due to the presence of collapsed micropores.

To keep the $Tm_2$ within the ranges described above, it is desirable to limit the composition of materials for the formation of the polyolefin microporous membrane to the ranges described below.

In the polyolefin microporous membrane of the invention, the difference between the $Tm_1$ and the $Tm_2$, $\Delta Tm$ (= $Tm_1$ - $Tm_2$), is preferably greater than -1.0°C and not greater than 2.0°C. The $\Delta Tm$ value is supposed to reflect the change in the structure of crystals during the formation of the polyolefin microporous membrane. When the $\Delta Tm$ falls within the range described above, the structure of the crystals in the polyolefin microporous membrane, such as lamellar thickness and crystallite size, is supposed to vary within appropriate ranges, and the mechanical strength, the shutdown feature, and the electrical resistance are easily well-balanced in the polyolefin microporous membrane. The $\Delta Tm$ is more preferably greater than - 0.5°C. Moreover, the $\Delta Tm$ is more preferably not more than 1.5°C, still more preferably not more than 1.0°C.

To keep the $\Delta Tm$ within the ranges described above, it is desirable to limit the composition of materials and the conditions of membrane formation for the formation of the polyolefin microporous membrane to the ranges described below.

In the polyolefin microporous membrane of the invention, the average pore size is preferably not less than 15 nm when measured using a palm porometer according to JIS K 3832-1990. When the average pore size is not less than 15 nm, more preferably not less than 18 nm, and still more preferably not less than 20 nm, the polyolefin microporous membrane can prevent the electrical resistance from increasing.

To keep the average pore size within the ranges described above, it is desirable to limit the composition of materials for the formation of the polyolefin microporous membrane to the ranges described below and to restrict the stretching conditions for the formation of the polyolefin microporous membrane to the ranges described below.

In the polyolefin microporous membrane of the invention, the bubble point pore size is preferably not less than 20 nm when measured using a palm porometer according to JIS K 3832-1990. When the bubble point pore size is not less than 20 nm, more preferably not less than 25 nm, and still more preferably not less than 30 nm, the polyolefin microporous membrane can prevent the electrical resistance from increasing.

To keep the bubble point pore size within the ranges described above, it is desirable to limit the composition of materials for the formation of the polyolefin microporous membrane to the ranges described below and to restrict the stretching conditions for the formation of the polyolefin microporous membrane to the ranges described below.

Preferably, the polyolefin microporous membrane of the invention shows an air resistance of not more than 200 seconds per 5 $\mu$m thickness when a volume of 100 $cm^3$ of air is passed through the polyolefin microporous membrane to measure the air resistance by the Oken-type tester method according to JIS P-8117: 2009. When the value of air resistance converted to per 5 $\mu$m thickness is not more than 200 seconds, more preferably not more than 110 seconds, and still more preferably not more than 100 seconds, the polyolefin microporous membrane can maintain ion permeability, which improves the output performance of a battery when the polyolefin microporous membrane is used as a battery separator. Additionally, when the value of air resistance converted to per 5 $\mu$m thickness is not more than 30 seconds, the ion permeability is well-balanced with the mechanical strength and the heat resistance.

To keep the value of air resistance converted to per 5 $\mu$m thickness within the ranges described above, it is desirable to limit the composition of materials and the laminate configuration for the formation of the microporous membrane to the ranges described below and to restrict the stretching and heat setting conditions for the formation of the polyolefin microporous membrane to the ranges described below.

Preferably, the polyolefin microporous membrane of the invention has a porosity of not less than 25%. When the porosity is not less than 25%, more preferably not less than 30%, still more preferably not less than 35%, and yet more preferably not less than 37%, the polyolefin microporous membrane can maintain mechanical strength and ion permeability when used as a battery separator, which enables maintaining the output performance and safety in a battery. Additionally, the porosity is preferably not more than 60% in view of the mechanical strength of the microporous membrane.

To keep the porosity within the ranges described above, it is desirable to limit the composition of materials for the formation of the polyolefin microporous membrane to the ranges described below and to restrict the stretching and heat setting conditions for the formation of the polyolefin microporous membrane to the ranges described below.

Preferably, the polyolefin microporous membrane of the invention has a film thickness of not less than 1 $\mu$m and not more than 25 $\mu$m. When the film thickness falls within the range described above, the polyolefin microporous membrane has excellent handling properties and increases the productivity and can help maintain the safety and prevent the output performance from decreasing when used in a battery. The film thickness is more preferably not more than 15 $\mu$m, still more preferably not more than 12 $\mu$m, yet more preferably not more than 10 $\mu$m, and much more preferably not more than 7 μm.

The film thickness can be adjusted without any negative effects on other properties by changing the number of revolutions of an extruder screw, the width of an unstretched sheet, the film forming speed, the draw ratio, and the like.

In the polyolefin microporous membrane of the invention, the upper limit of the peak top temperature $Tm_L$ is preferably observed at not higher than 124°C, more preferably not higher than 123°C, still more preferably not higher than 122.5°C, in the melting curve during the second heating step by a differential scanning calorimeter (DSC) when liquid paraffin is contained in the polyolefin microporous membrane. The lower limit of this peak top temperature is preferably not lower than 118°C, more preferably not lower than 120°C, and still more preferably not lower than 122°C. The value of $Tm_L$ is obtained as a peak top temperature observed when the polyolefin microporous membrane blended with liquid paraffin, a liquid plasticizer, is first melted at a heating rate of 10°C/min and then quickly cooled at a cooling rate of 300°C/min and again melted at a heating rate of 10°C/min in the DSC analysis. The $Tm_L$ value indicates the melting point of crystals observed when a polyolefin resin in the polyolefin microporous membrane is crystallized as if the crystals of the polyolefin resin were formed during the formation of the polyolefin microporous membrane. When the $Tm_L$ falls within the ranges described above, the structure of the crystals is easily controlled within an appropriate range before stretching for the formation of the polyolefin microporous membrane, and the mechanical strength, the shutdown feature, and the electrical resistance are easily well-balanced in the polyolefin microporous membrane. To keep the $Tm_L$ of the polyolefin microporous membrane within the ranges described above, it is desirable to limit the composition of materials and the conditions of membrane formation for the formation of the polyolefin microporous membrane to the ranges described below.

In the polyolefin microporous membrane of the invention, the value of electrical resistance converted to per 5 μm thickness is preferably not more than 0.5 Q·m$^2$, more preferably not more than 0.45 Q·m$^2$, still more preferably not more than 0.4 Q·m$^2$, at room temperature. When the value of electrical resistance converted to per 5 μm thickness is not more than 0.5 Ω·cm$^2$ at room temperature, the polyolefin microporous membrane can be suitably used as a battery separator for secondary batteries requiring high output power, such as those for electric vehicles and the like.

To keep the above conversion value of electrical resistance within the ranges described above, it is desirable to limit the composition of materials for the formation of the polyolefin microporous membrane to the ranges described below and to restrict the stretching and heat setting conditions for the formation of the polyolefin microporous membrane to the ranges described below.

In the polyolefin microporous membrane of the invention, the value of puncture strength converted to per 5 μm thickness is preferably not less than 1.5 N. When the puncture strength is not less than 1.5 N, more preferably not less than 1.7 N, still more preferably not less than 2.0 N, yet more preferably not less than 2.2 N, and much more preferably not less than 2.4 N, the polyolefin microporous membrane can prevent short-circuit formation in the battery winding process or due to the presence of foreign matter in a battery even if the polyolefin microporous membrane is decreased in thickness, which results in improved battery safety. Additionally, the puncture strength as described above is preferably not more than 6.0 N in view of improving the shutdown feature.

To keep the puncture strength within the ranges described above, it is desirable to limit the composition of materials for the formation of the polyolefin microporous membrane to the ranges described below and to restrict the stretching conditions for the formation of the polyolefin microporous membrane to the ranges described below.

Preferably, the polyolefin microporous membrane of the invention has a shutdown temperature of 139°C or lower when measured by heated air permeability test. When the shutdown temperature is not higher than 139°C, more preferably not higher than 137°C, still more preferably not higher than 135°C, and yet more preferably not higher than 134°C, secondary batteries with high safety can be provided when the polyolefin microporous membrane is used as a battery separator for the batteries requiring a high energy density, a high capacity, and high output power, such as those for electric vehicles and the like. Additionally, the shutdown temperature is preferably not lower than 100°C. When the shutdown temperature is not lower than 100°C, the polyolefin microporous membrane can prevent the output performance from decreasing due to the presence of blocked pores even in the normal operational environment or in the battery producing process.

To keep the shutdown temperature within the ranges described above, it is desirable to limit the composition of materials for the formation of the polyolefin microporous membrane to the ranges described below and to restrict the stretching and heat setting conditions for the formation of the polyolefin microporous membrane to the ranges described below.

The polyolefin microporous membrane of the invention may contain an ultra-high-molecular-weight polyolefin resin (UHMwPO) with a weight-average molecular weight of not less than $1.4 \times 10^6$ and less than $4.0 \times 10^6$ as a raw material. The presence of the ultra-high-molecular-weight polyolefin resin allows the drawing stress to be efficiently transmitted so that the unstretched area is easily reduced, which enables improvement of mechanical strength and reduction of electrical resistance.

As the UHMwPO described above, an ultra-high-molecular-weight polyethylene polymer (UHMwPE) is preferred. The UHMwPE can be a homopolymer of ethylene or may be a copolymer containing ethylene and a small proportion of another α-olefin. Examples of said another α-olefin include propylene, butene-1, hexene-1, pentene-1, 4-methylpentene-1, octene, vinyl acetate, methyl methacrylate, and styrene.

The melting point of the UHMwPO is preferably not higher than 137°C, more preferably not higher than 136°C, still more preferably not higher than 134°C, when measured by differential scanning calorimeter (DSC). Additionally, the melting point of the UHMwPO is preferably not lower than 120°C, more preferably not lower than 125°C, and still more preferably not lower than 130°C. When the melting point falls within the ranges described above, the thermal stability can be controlled within an appropriate range upon formation of a microporous membrane, which eventually enables low-temperature shutdown and reduction of electrical resistance.

The polyolefin microporous membrane of the invention can be used for various applications as a filter, a fuel cell separator, a capacitor separator, and the like. In particular, the polyolefin microporous membrane can be suitably used as a battery separator for secondary batteries requiring a high energy density, a high capacity, and high output power, such as those for electric vehicles and the like, because the polyolefin microporous membrane provides higher safety and greater output performance when used as a battery separator.

Preferably, the polyolefin microporous membrane of the invention is produced through the following steps (a) to (f). As an example, a production method of a polyolefin microporous membrane using the above raw material will be described below. However, the polyolefin microporous membrane of the invention is not limited only to a polyolefin microporous membrane produced by the following production method.

(a) Preparation of a polyolefin-based resin solution

A polyolefin-based resin and various additives are dissolved in a plasticizer with heating to prepare a polyolefin-based resin solution.

The plasticizer should be a solvent that can dissolve well the polyolefin-based resin and is preferably a liquid solvent that is a liquid at room temperature to prevent irregularity in stretching and to allow stretching with a relatively high draw ratio. The liquid solvent includes aliphatic, alicyclic, or aromatic hydrocarbons, such as nonane, decane, decalin, paraxylene, undecane, dodecane, and liquid paraffin; and mineral oil fractions with boiling points equal to those of the hydrocarbons; and phthalate esters, such as dibutyl phthalate and dioctyl phthalate, which are liquids at room temperature. Among those, a nonvolatile liquid solvent like liquid paraffin is preferable to obtain a gel sheet with a stable liquid solvent content.

Preferably, the liquid solvent has a viscosity of not less than 20 cSt and not more than 200 cSt at 40°C. When the viscosity is not less than 20 cSt, a sheet formed by extrusion of the polyolefin-based resin solution from a die is less uneven. In contrast, when the viscosity is not more than 200 cSt, the liquid solvent will be easily removed.

The viscosity of the liquid solvent can be measured using a Ubbelohde type viscometer at 40°C.

A solid solvent that is miscible with a polyolefin at melt-kneading but is a solid at room temperature can be mixed with a liquid solvent. Examples of the solid solvent include stearyl alcohol, ceryl alcohol, and paraffin wax.

Preferably, the blending percentage of the plasticizer is more than 50% by mass and less than 90% by mass when the total of the polyolefin-based resin and the plasticizer accounts for 100% by mass. When the blending percentage of the plasticizer is more than 50% by mass, shrinkage in the thickness direction is reduced in the resulting sheet so that the workability of the sheet can be increased. Additionally, when the blending percentage of the plasticizer is less than 90% by mass, swells or necks are prevented from growing at the output port of a die in the formation of the resin solution into a sheet so that the workability or formability of the sheet can be increased.

Preferably, the polyolefin-based resin solution is melt-kneaded in a twin screw extruder to prepare a solution containing the polyolefin-based resin at a high concentration.

The polyolefin-based resin solution is homogeneously mixed in the extruder at a temperature high enough to completely melt the polyolefin-based resin.

The melt-kneading temperature is preferably in the range of (the melting point of the polyolefin-based resin + 10°C) to (the melting point of the polyolefin-based resin + 120°C), more preferably in the range of (the melting point of the polyolefin-based resin + 20°C) to (the melting point of the polyolefin-based resin + 100°C). For example, in cases where the polyolefin-based resin is a polyethylene-based resin, the polyethylene-based resin has a melting point of about 130 to 140°C, and the melt-kneading temperature is preferably in the range of 140 to 250°C, more preferably in the range of 150 to 210°C, still more preferably in the range of 160 to 230°C, and yet more preferably in the range of 170 to 200°C.

A lower melt-kneading temperature is more preferable from the viewpoint of preventing the resin from deteriorating. However, a temperature lower than the above-described temperature range may cause unmelted materials to exist in an extrudate from a die, which may result in, for example, film breakage during the subsequent stretching process. In contrast, a temperature higher than the above-described temperature range may lead to the enhanced thermal degradation of the polyolefin, which may cause the resulting microporous membrane to have lower physical properties, such as lower mechanical strength and porosity. Additionally, degradation products are deposited on a chill roller or a roller for the stretching process and attached to a sheet on the roller, which deteriorates the appearance of the sheet. Thus, the kneading is preferably performed at a temperature within the ranges described above.

The melting point is measured by DSC in accordance with JIS K7121: 2012.

After the melt-kneading, any foreign matter or denatured polymer is preferably removed with a filter.

(b) Formation of a gel sheet

The melt-kneaded resin solution is extruded from a die and cooled to yield a gel sheet. The microphase separation of the polyethylene-based resin in the solvent can be stabilized by the cooling process. Preferably, the extruded resin solution is cooled down to a temperature in the range of 10 to 50°C during the cooling process. It is understood that a final cooling temperature is preferably at or below the crystallization end temperature to create a denser organization, which facilitates uniform stretching during the subsequent stretching process. Thus, the extruded resin solution is preferably cooled down at a rate of not less than 30°C/min at least to the gelation temperature or below. When the cooling rate is less than 30°C/min, the degree of crystallization is increased so that a gel sheet ready to be stretched is hard to be formed. In general, a slow cooling rate leads to formation of relatively large crystals, which causes the gel sheet to have a coarse organization and also have an expanded gel structure. In contrast, a fast cooling rate leads to formation of relatively small crystals, which causes the gel sheet to have a dense organization and leads to improvement of film strength and elongation as well as to a uniformly stretched state.

Additionally, the melting point of the gel sheet is preferably 127°C, especially preferably a temperature of 126°C or lower, when measured by DSC. The lower limit of the melting point is preferably a temperature of 115°C or higher with considering the influence of the temperature to heat setting subsequent to the stretching process. When the melting point of the gel sheet falls within the ranges described above, the melting point of crystals is easily decreased in the gel sheet post stretching, which enables low-temperature shutdown, and the unstretched area is reduced due to the more flexible structure of the gel sheet, which enables reduction of electrical resistance. The above-described melting point of the gel sheet can be adjusted by the melting point of the above-described polyolefin-based resin, the percentage of a plasticizer, the cooling condition, and the like.

Examples of the cooling method include a method which includes directly contacting the object with cold air, cold water, or other cold media, a method which includes contacting the object with a coolant-cooled roller, a method which uses a casting drum, and the like.

(c) Stretching

The obtained gel sheet is biaxially stretched. Biaxial stretching can be performed by any of inflation, simultaneous biaxial stretching, and sequential biaxial stretching techniques. Among those, simultaneous biaxial stretching or sequential biaxial stretching is preferably employed for controlling the film stability, thickness uniformity, high rigidity and dimensional stability of a film. Examples of simultaneous biaxial stretching include an approach using a simultaneous biaxial tentering machine. Additionally, examples of sequential biaxial stretching include an approach using a roller drawing machine for MD stretching in combination with a tentering machine for TD stretching, and an approach using a combination of multiple tentering machines.

The gel sheet is preferably stretched in either the MD or TD direction to a draw ratio of 5 or more.

The area draw ratio is preferably kept at 25 or more. Film uniformity is easily achieved and the unstretched area is prone to be reduced in the gel sheet at an area draw ratio of 25 or more, more preferably 49 or more, and still more preferably 64 or more, which enables providing a microporous membrane excellent from the viewpoint of mechanical strength and electrical resistance. Additionally, the area draw ratio is preferably kept at 150 or less. At an area draw ratio of 150 or less, film breakage is prevented during formation of a microporous membrane so that the productivity is increased, as well as excessive stretching-induced orientation is prevented, which enables prevention of increase in shutdown temperature due to an increased melting point of the microporous membrane.

The stretching temperature is preferably not higher than (the melting point of the gel sheet + 10°C), more preferably in the range of (the crystal dispersion temperature Tcd of the polyolefin-based resin) to (the melting point of the gel sheet + 5°C). Specifically, the stretching temperature is preferably in the range of 90 to 125°C, more preferably in the range of 90 to 120°C, because the polyethylene composition has a crystal dispersion temperature of about 90 to 100°C. At a temperature of 90°C or higher, pores are fully opened and film thickness uniformity is easily achieved, which increases the porosity. At a temperature of 125°C or lower, pore-blocking due to melting of the sheet can be prevented. The crystal dispersion temperature Tcd is determined from the temperature dependence of the dynamic viscoelasticity measured in accordance with ASTM D4065.

The stretching process as described above induces fragmentation of the organization formed in the gel sheet, formation of a denser microstructure in the crystal phase, and production of many fibrils. The fibrils are irregularly connected to form a three-dimensional network structure. The stretching process leads to expansion of micropores as well as increase of mechanical strength, which makes the microporous membrane suitable for use as a battery separator. Additionally, the polyolefin-based resin is sufficiently plasticized and softened and the fragmentation of the organization smoothly proceeds due to the stretching process prior to removal of the plasticizer, so that the dense microstructure can be uniformly formed in the crystal phase. Moreover, the fragmentation proceeds so smoothly that the strain generated during the stretching process is prone to be resolved, which can provide the microporous membrane with a lower thermal shrinkage ratio as compared with the case where the polyolefin-based resin is stretched after removal of the plasticizer.

(d) Extraction (washing out) of a plasticizer

The plasticizer (solvent) remaining in the gel sheet is removed using a washing solvent. Because the polyolefin-based resin phase is separated from the solvent phase, a microporous membrane is produced by removal of the solvent.

Examples of the washing solvent include saturated hydrocarbons, such as pentane, hexane, and heptane; chlorinated hydrocarbons, such as methylene chloride and carbon tetrachloride; ethers, such as diethyl ether and dioxane; ketones, such as methyl ethyl ketone; and linear fluorocarbons, such as trifluoroethane. Preferably, these washing solvents have a low surface tension (for example, 24 mN/m or less at 25°C). Use of a washing solvent with a low surface tension reduces shrinkage of the microporous network structure due to the surface tension at the gas-liquid interface during the drying process subsequent to the washing process, which results in production of a microporous membrane with high porosity and permeability. These washing solvents are appropriately selected depending on the plasticizer and are used individually or in combination.

Examples of the washing method can include a method in which the gel sheet is immersed in a washing solvent for extraction purposes, a method in which the gel sheet is showered with a washing solvent, or a combination thereof.

The volume of the washing solvent used varies depending on the washing method, but the volume is generally preferably not less than 300 parts by mass relative to 100 parts by mass of the gel sheet.

The washing temperature may be in the range of 15 to 30°C and is increased up to 80°C as necessary. In this process, a longer time period is more desirable to immerse the gel sheet in a washing solvent, from the viewpoints of enhancing the washing effect of the solvent, maintaining the consistency of microporous membrane properties for the polyolefin microporous membrane in the TD direction and/or in the MD direction, and increasing the mechanical and electrical properties of the polyolefin microporous membrane. The wash process as described above is preferably performed until the concentration of the solvent remaining in the washed gel sheet, namely in the polyolefin microporous membrane, reaches to less than 1% by mass.

(e) Drying

During the drying process, the solvent in the polyolefin microporous membrane is removed by drying. In case of insufficient drying, the porosity and the permeability are reduced in the polyolefin microporous membrane in the later heat treatment. As a drying method, use of heated metal rollers, use of hot air, or the like can be selected.

(f) Heat treatment and redrawing

The dried polyolefin microporous membrane may be stretched (redrawn) at least in the uniaxial direction. The polyolefin microporous membrane can be stretched again similarly to the above stretching process, for example, by a method using a tentering machine, while being heated. The redrawing process may be performed by either uniaxial or biaxial stretching. In the case of multistep stretching, the redrawing process is performed by a combination of simultaneous biaxial stretching and/or sequential stretching processes.

The temperature for the redrawing process is preferably not higher than the melting point of the polyethylene composition, more preferably in the range of (Tcd - 20°C) to the melting point. Specifically, the above temperature is preferably in the range of 70 to 140°C, more preferably in the range of 110 to 138°C, and still more preferably in the range of 120 to 135°C.

The draw ratio for the redrawing process is preferably in the range of 1.01 to 3.0, especially preferably in the range of 1.01 to 2.0 in the TD direction, more preferably in the range of 1.2 to 1.8, and especially preferably in the range of 1.3 to 1.6, in case of uniaxial stretching. The draw ratio is preferably in the range of 1.01 to 1.6 in both MD and TD directions, in case of biaxial stretching. The draw ratio for the redrawing process in the MD direction may be different from that in the TD direction. The redrawing process with a draw ratio within the ranges described above can improve the mechanical strength and electrical resistance of the polyolefin microporous membrane and also prevent increase of shutdown temperature due to an increased melting point of the microporous membrane resulting from excessive crystal orientation.

Additionally, a relaxation process is preferably performed further on the polyolefin microporous membrane. The relaxation ratio is preferably 0.9 or lower relative to the maximum elongation caused by the above redrawing process.

When the relaxation ratio is 0.9 or lower, and preferably 0.85 or lower, the thermal shrinkage of the polyolefin microporous membrane is prevented, which can reduce formation of wrinkles or curls. Additionally, when the relaxation ratio is 0.7 or more, formation of wrinkles or decrease of permeability can be prevented.

(g) Other processes

Furthermore, crosslinking or hydrophilization may be additionally applied to the polyolefin microporous membrane depending on the intended use.

The crosslinking treatment increases the meltdown temperature of the polyolefin microporous membrane. The crosslinking treatment can be performed by irradiating the polyolefin microporous membrane with ionizing radiation, such as $\alpha$-rays, $\beta$-rays, $\gamma$-rays, or electron beams. In the case of electron beam crosslinking, an electron beam with a dose of 0.1 to 100 Mrad or with an acceleration voltage of 100 to 300 kV is preferably irradiated to the polyolefin microporous membrane.

The hydrophilization treatment can be performed by monomer grafting, surfactant treatment, corona discharge, or the like. The monomer grafting is preferably performed after the crosslinking treatment.

For the surfactant treatment, any of non-ionic, cationic, anionic, and amphoteric surfactants can be used, and a non-ionic surfactant is preferably used. A solution prepared by dissolving a surfactant in water or a lower alcohol, such as methanol, ethanol, or isopropyl alcohol, is applied to the polyolefin microporous membrane by dipping or by doctor blade coating.

The polyolefin microporous membrane of the invention may be laminated with a porous layer containing other resins than the polyolefin-based resin, for example, by means of a certain coating technique or vapor deposition to provide functions such as meltdown feature, heat resistance, and adhesive ability and finally to produce a multi-layer polyolefin porous membrane.

For example, an inorganic layer containing a binder and inorganic particles may be deposited as the porous layer. As the binder contained in the inorganic layer, a resin, such as acrylic resin, polyvinylidene fluoride resin, polyamide-imide resin, polyamide resin, aromatic polyamide resin, or polyimide resin, can be used. As the inorganic particles contained in the inorganic layer, inorganic particles made of alumina, boehmite, barium sulfate, magnesium oxide, magnesium hydroxide, magnesium carbonate, silicon, or the like can be used.

The porous layer may be a porous material made of one of the resins illustrated as examples of the binder.

Examples

The present invention will be described below in more detail with reference to examples. However, the present invention is not limited only to those examples.

The methods of measurement are evaluation are first described. Unless specifically stated otherwise, those methods were performed at a temperature of $25 \pm 2°C$ (room temperature) and a humidity of $50 \pm 10\%$.

(1) Melting point of a polyolefin resin material

The melting point of a polyolefin resin material was measured by differential scanning calorimetry (DSC) in accordance with JIS K7121: 2012. A sample of 6.0 mg was enclosed in an aluminum sample pan and then heated using a PYRIS Diamond DSC manufactured by PerkinElmer, Inc. from 30°C to 230°C at a rate of 10°C/min under nitrogen atmosphere, held at 230°C for 5 minutes after the heating step from 30°C to 230°C at a rate of 10°C/min (the first heating step), cooled down at a rate of 10°C/min, and again heated from 30°C to 230°C at a heating rate of 10°C/min (the second heating step) to obtain respective endothermic curves. The peak top temperature observed in the endothermic curve during the second heating step was defined as the melting point of the polyolefin resin material.

(2) Molecular weight of a polyolefin raw material

The molecular weight of the polyolefin was determined by gel permeation chromatography (GPC) under the following conditions:

- Analytical instrument: GPC-150C manufactured by Waters Corporation;
- Column: Shodex UT806M manufactured by Showa Denko K.K.;
- Column temperature: 160°C;
- Solvent (mobile phase): 1,2,4-trichlorobenzene;
- Solvent flow rate: 1.0 ml/min;
- Sample concentration: 0.1% by weight (dissolution conditions: 160°C / 1 h);

- Injection volume: 500 $\mu$l;
- Detector: Differential refractometer (RI detector) manufactured by Waters Corporation;
- Standard curve: prepared using the conversion coefficient for polyethylene (0.46) from a standard curve obtained using a standard sample based on polystyrene monodisperse.

(3) High-temperature ratio of crystals to melt H in a polyolefin resin

The high-temperature ratio of crystals to melt H in the polyolefin resin was determined by differential scanning calorimetry (DSC). A sample of 6.0 mg was enclosed in an aluminum sample pan and then heated using a PYRIS Diamond DSC manufactured by PerkinElmer, Inc. from 30°C to 230°C at a rate of 10°C/min under nitrogen atmosphere, held at 230°C for 5 minutes after the heating step from 30°C to 230°C at a rate of 10°C/min (the first heating step), cooled down at a rate of 300°C/min, and again heated from 30°C to 230°C at a heating rate of 10°C/min (the second heating step) to obtain respective endothermic curves. A linear baseline was drawn between 60°C and 160°C for the endothermic curve obtained during the second heating step to calculate the quantity of heat from the area surrounded by the linear baseline and the endothermic curve, and the calculated quantity of heat was divided by the mass of the sample to obtain the total fusion heat $H_{a11}$. Additionally, the quantity of heat was calculated from the area between the linear baseline and the endothermic curve under a peak occurring at or above the higher of the temperatures on each side of the peak which were corresponding to half the intensity of the peak top, which was higher than the peak top temperature, and the calculated quantity of heat was divided by the mass of the sample to obtain the high-temperature crystal fusion heat $H_{ht}$. The values of the obtained total fusion heat $H_{a11}$ and high-temperature crystal fusion heat $H_{ht}$ were substituted into the following formula to obtain the high-temperature ratio of crystals to melt H of the polyolefin resin:

$$H\ (\%) = (H_{ht} / H_{all}) \times 100 \qquad \qquad \text{(Formula)}.$$

(4) Melting point of a gel sheet

The melting point of a gel sheet was measured by differential scanning calorimetry (DSC) in accordance with JIS K7121: 2012 before the gel sheet was stretched to form a polyolefin microporous membrane. A sample of 20 mg was enclosed in an aluminum sample pan and then heated using a PYRIS Diamond DSC manufactured by PerkinElmer, Inc. from 30°C to 230°C at a rate of 10°C/min to obtain an endothermic curve. The peak top temperature observed in the obtained endothermic curve was defined as the melting point of the unstretched gel sheet.

(5) Limiting viscosity of a polyolefin microporous membrane

The limiting viscosity of a polyolefin microporous membrane was calculated by dissolving the polyolefin microporous membrane in decalin at different concentrations, using the solution with each concentration at 135°C to determine the reduced viscosity, and extrapolating the reduced viscosity to zero concentration.

(6) Fraction of polyethylene molecules with a molecular weight of not more than $3.5 \times 10^5$ (Ratio of materials with a molecular weight of 350,000 or lower) in a polyolefin microporous membrane

The fraction of polyethylene molecules with a molecular weight of not more than $3.5 \times 10^5$ in the polyolefin microporous membrane was calculated using the molecular mass distribution determined by gel permeation chromatography (GPC) under the conditions below, according to the following formula:

Fraction of polyethylene molecules with a molecular weight of not more than 3.5 x $10^5$ in a polyolefin microporous membrane (% by mass) = (mass of polyethylene molecules with a molecular weight of not more than 3.5 x $10^5$) / (mass of polyethylene molecules of all molecular weights) x 100

- Analytical instrument: GPC-150C manufactured by Waters Corporation;
- Column: Shodex UT806M manufactured by Showa Denko K.K.;
- Column temperature: 160°C;

- Solvent (mobile phase): 1,2,4-trichlorobenzene;
- Solvent flow rate: 1.0 ml/min;
- Sample concentration: 0.1% by weight (dissolution conditions: 160°C / 1 h);
- Injection volume: 500 μl;
- Detector: Differential refractometer (RI detector) manufactured by Waters Corporation;
- Standard curve: prepared using the conversion coefficient for polyethylene (0.46) from a standard curve obtained using a standard sample based on polystyrene monodisperse.

(7) Fraction of polyethylene molecules with a molecular weight of not less than $9.0 \times 10^5$ (Ratio of materials with a molecular weight of 900,000 or higher) in a polyolefin microporous membrane

The fraction of polyethylene molecules with a molecular weight of not less than $9.0 \times 10^5$ in a polyolefin microporous membrane was calculated using the molecular mass distribution determined by GPC under the same conditions as described above, according to the formula below. Specifically, the formula is as described below.

Fraction of polyethylene molecules with a molecular weight of not less than $9.0 \times 10^5$ in a polyolefin microporous membrane (% by mass) = (mass of polyethylene molecules with a molecular weight of not less than $9.0 \times 10^5$) / (mass of polyethylene molecules of all molecular weights) x 100

(8) Film thickness

The thickness was measured at five positions within an area of 50 mm × 50 mm in a polyolefin microporous membrane by using a contact-type thickness gauge ("LITEMATIC" VL-50, equipped with a spherical contact point of 10.5 mm in diameter; manufactured by Mitutoyo Corporation) with a measuring force of 0.01 N, and the mean value of the measured values was defined as the film thickness (μm) of the polyolefin microporous membrane.

(9) Porosity

A test piece with a size of 5 cm × 5 cm was cut out from a polyolefin microporous membrane, and the volume ($cm^3$) and mass (g) of the test piece were measured at room temperature (25°C). The porosity of the polyolefin microporous membrane was calculated from those values and a constant membrane density value of 0.99 $g/cm^3$ according to the following formula:

$$\text{Porosity (\%)} = (\text{volume - mass / membrane density}) / \text{volume x 100} \qquad \text{(Formula).}$$

(10) Bubble point pore size (BP pore size) and average pore size

The pore size was measured at three different points in a polyolefin microporous membrane by the following measurement method to determine the mean values of bubble point pore size and average pore size.
A palm porometer (manufactured by Porous Material Inc. (PMI); CFP-1500A) was used in the sequence of DRY-UP and WET-UP operational modes for the measurement based on JIS K 3832: 1990 to determine the bubble point pore size and the average pore size. In the WET-UP mode measurement, pressure was applied to the microporous membrane imbibed with GALWICK™, a liquid with a known surface tension manufactured by PMI, to determine the pressure at which air started passing through the membrane, and the pore size calculated from the pressure value was defined as the maximum pore size. The average pore size was calculated from a pressure value corresponding to the intersection between a curve with one-half the slope of the pressure-discharge curve obtained in the DRY-UP mode measurement and the curve obtained in the WET-UP mode measurement. The average pore size was calculated from the pressure value using the following formula:

$$D = C \cdot \Gamma / P;$$

D:  average pore size of a polyolefin microporous membrane ($\mu$m);

$\Gamma$:  surface tension of the liquid (15.9 mN/m);

P:  pressure (Pa);

C:  coefficient ($2.86 \times 10^3$).

(11) Air resistance converted to per 5 $\mu$m thickness

Air resistance was measured by the Oken-type tester method in accordance with JIS P-8117: 2009. An Oken-type air resistance tester (EGO-1T, manufactured by Asahi Seiko Co., Ltd.) was used to measure the air resistance $P_1$ (sec), for which a volume of 100 cm$^3$ of air was passed through a polyolefin microporous membrane while the pressure was maintained at 0.05 MPa for the measurement. Then, the air resistance $P_2$, a value converted to a resistance per 5 $\mu$m of film thickness, was calculated according to the following formula:

$$P_2 = (P_1 \text{ x } 5) / T;$$

$P_2$:  air resistance converted to per 5 $\mu$m thickness (sec/5 $\mu$m);

$P_1$:  air resistance (sec);

T:  film thickness of a polyolefin microporous membrane ($\mu$m).

(12) Peak top temperature $Tm_L$ in the presence of a liquid plasticizer

The peak top temperature $Tm_L$ of a polyolefin microporous membrane containing a liquid plasticizer was measured by differential scanning calorimetry (DSC) in accordance with JIS K7121: 2012, except that conditions were as described below. First, a polyolefin microporous membrane of 6.0 mg was introduced into an aluminum sample pan. Then, 24 mg of liquid paraffin (percent naphthene carbon $C_N$: 30% $\pm$ 3%; percent aromatic carbon $C_A$: 1% or less; viscosity at 40°C: 35 cSt) as a liquid plasticizer was introduced into the aluminum sample pan containing the polyolefin microporous membrane, and the resulting aluminum sample pan was sealed. The aluminum sample pan was left to stand at 25°C for 1 hour or longer and then heated using a PYRIS Diamond DSC manufactured by PerkinElmer, Inc. from 30°C to 230°C at a rate of 10°C/min under nitrogen atmosphere (the first heating step), held at 230°C for 10 minutes, cooled down at a rate of 300°C/min, and again heated from 30°C to 230°C at a heating rate of 10°C/min (the second heating step) to obtain respective endothermic curves. The peak top temperature observed in the endothermic curve during the second heating step was defined as the peak top temperature $Tm_L$ in the presence of the liquid plasticizer.

(13) Peak top temperature Tmi observed in the melting curve during the first heating step by DSC

The peak top temperature Tmi of a polyolefin microporous membrane, which was observed in the melting curve during the first heating step by a differential scanning calorimeter (DSC), was measured by differential scanning calorimetry (DSC) in accordance with JIS K7121: 2012. A sample of 6.0 mg was enclosed in an aluminum sample pan and then heated using a PYRIS Diamond DSC manufactured by PerkinElmer, Inc. from 30°C to 230°C at a rate of 10°C/min to obtain an endothermic curve. The peak top temperature observed in the obtained endothermic curve was defined as the Tmi of the polyolefin microporous membrane.

(14) Peak top temperature $Tm_2$ observed in the melting curve during the second heating step by DSC

The peak top temperature $Tm_2$ of a polyolefin microporous membrane, which was observed in the melting curve during the second heating step by a differential scanning calorimeter (DSC), was measured by differential scanning calorimetry (DSC) in accordance with JIS K7121: 2012. A sample of 6.0 mg was enclosed in an aluminum sample pan and then heated using a PYRIS Diamond DSC manufactured by PerkinElmer, Inc. from 30°C to 230°C at a rate of 10°C/min under nitrogen atmosphere, held at 230°C for 20 minutes after the heating step from 30°C to 230°C at a rate of 10°C/min (the first heating step), cooled down at a rate of 10°C/min, and again heated from 30°C to 230°C at a heating rate of 10°C/min (the second heating step) to obtain respective endothermic curves. The peak top temperature observed in the endothermic curve during the second heating step was defined as $Tm_2$ of the polyolefin microporous membrane.

(15) $\Delta$Tm

The value of $\Delta$Tm was calculated according to the following formula:

$$\Delta Tm = Tm_1 - Tm_2 \qquad \text{(Formula).}$$

(16) Area ratio S of a melting peak(s) occurring at a temperature of not lower than 140°C determined by DSC

From a result of differential scanning calorimetry (DSC) analysis based on JIS K7121: 2012, the ratio of crystals to melt at a temperature of not lower than 140°C was calculated for a polyolefin microporous membrane. A sample of 6.0 mg was enclosed in an aluminum sample pan and then heated using a PYRIS Diamond DSC manufactured by PerkinElmer, Inc. from 30°C to 230°C at a rate of 10°C/min under nitrogen atmosphere to obtain an endothermic curve. A linear baseline was drawn between 60°C and 160°C for the obtained endothermic curve to calculate the quantity of heat from the area surrounded by the linear baseline and the endothermic curve, and the calculated quantity of heat was divided by the mass of the sample to obtain the total fusion heat $S_{a11}$. Additionally, the quantity of heat was calculated from the area between the linear baseline and the endothermic curve under a peak occurring at a temperature of not lower 140°C, and the calculated quantity of heat was divided by the mass of the sample to obtain the fusion heat $S_{140}$ at a temperature of not lower than 140°C. The values of the total fusion heat $S_{a11}$ and fusion heat $S_{140}$ at a temperature of not lower than 140°C were substituted into the following formula to obtain the ratio S of crystals to melt at a temperature of not lower than 140°C in the polyolefin microporous membrane:

$$S\ (\%) = (S_{140} / S_{all}) \times 100;$$

S: area ratio of a melting peak(s) occurring at a temperature of not lower than 140°C to all the melting peak(s) (%);
$S_{140}$: area of a melting peak(s) occurring at a temperature of not lower than 140°C;
$S_{a11}$: area of all the melting peak(s).

(17) Average degree of in-plane molecular orientation $I_{ave}$ determined by Raman spectroscopy

The in-plane orientation index of a polyolefin microporous membrane was determined by Raman spectroscopy measurement.

A laser light traveling in a direction normal to the surface of a film (in the x-y plane) was perpendicularly incident on the film and was polarized with a polarizer. A Raman spectrum was recorded every time the measurement sample was rotated every 15° from the MD direction, which was defined as the zero degree orientation. For the obtained Raman spectra, a baseline was drawn between 1020 cm$^{-1}$ and 1160 cm$^{-1}$ with correction via linear approximation to determine the peak intensities at 1060 cm$^{-1}$ and 1130 cm$^{-1}$ after peak fitting with the Gaussian-Lorentzian hybrid function for the calculation of the peak intensities. The ratio of peak intensity between 1130 cm$^{-1}$ and 1060 cm$^{-1}$ ($I_{1130}/I_{1060}$) was defined as the orientation index. The orientation indexes were determined by the measurement every 15° from 0° to 360° (15° $\times$ n, $1 \leq n \leq 24$, n = integer), where the MD direction was defined as the zero degree orientation, and the mean orientation indexes were determined for each direction.

· Instrument: micro-Raman spectroscopy system ("inVia" manufactured by Renishaw plc.)
· In a 180° backscattering configuration,
· With a focal length of 250 mm,
· With a diffraction gating of 3,000 lines/mm,
· With excitation laser at 532 nm,
· With a 50x objective lens (N.A. = 0.75),
· With spot sizes (spatial resolution) of 5 μm.

(18) Puncture strength converted to per 5 μm thickness

The puncture strength was measured in accordance with JIS Z 1707: 2019, except that the testing speed was changed to 2 mm/sec. A polyolefin microporous membrane was pierced in the atmosphere at 25°C with a round-head (radius of curvature R: 0.5 mm) pin of 1.0 mm in diameter to measure the maximum load (N) using a force gauge (DS2-20N, manufactured by Imada Co., Ltd.) and finally to calculate the puncture strength converted to per 5 μm thickness according to the following formula:

$$\text{Puncture strength converted to per 5 μm thickness (N/5 μm)} = \text{maximum load (N) x}$$

$$5 / T;$$

T: film thickness of a polyolefin microporous membrane (μm).

(19) Shutdown temperature

The air resistance of a microporous membrane was measured during heating at a heating rate of 5°C/min by an air resistance tester (EGO-1T, manufactured by Asahi Seiko Co., Ltd.) to determine the temperature at which the air resistance reached $1.0 \times 10^5$ sec/100 cm$^3$ air, the detection limit of the air resistance tester, and the resulting temperature was defined as the shutdown temperature (°C) identified by the heated air permeability test. A measuring cell for the air resistance measurement was composed of an aluminum block, in which the microporous membrane was placed just above a thermocouple. A sample with a size of 50 mm × 50 mm was cut out from the microporous membrane, and the resulting sample was sealed with an O-ring on the periphery and then measured under the heating condition.

(20) Electrical resistance converted to per 5 μm thickness R$_2$

Test pieces with a diameter of 19 mm were cut out from a polyolefin microporous membrane in the atmosphere at a humidity of 30% ± 10%. One test piece and other materials were placed in a coin cell battery case (CR2032 specification), and an electrolyte solution was introduced thereto. As the other materials and the electrolyte solution, LiCoO$_2$ and artificial graphite were used for the cathode and the anode, respectively, and a solution of LiPF$_6$ in a 4:6 volumetric mixture solvent of EC and EMC at a concentration of 1 mol/L was used for the electrolyte solution.
The abbreviations are defined as follows:

LiPF$_6$, lithium hexafluorophosphate;
EC, ethylene carbonate;
EMC, ethyl methyl carbonate.

The same applies hereinafter.
A vacuum dryer was used to make the coin cell battery materials impregnated with the electrolyte solution at a gauge pressure of -50 kPa for one minute. Then, the semifinished coin cell battery was sealed with a crimping machine to produce a coin cell battery for evaluation.
The electrical resistance of the resulting coin cell battery was measured with an impedance analyzer at a frequency of 200 kHz in the atmosphere at 25°C.
Because the measured electrical resistance also included those derived from the other materials, in addition to the electrical resistance of the polyolefin microporous membrane, the above measurement was repeated with changing the number of test pieces of the polyolefin microporous membrane to calculate the value of electrical resistance (Ω·cm$^2$) per one piece of the polyolefin microporous membrane. Then, the electrical resistance converted to per 5 μm thickness was calculated according to the following formula:

$$R_2 = R_1 \text{ x } 5 / T;$$

R$_2$: electrical resistance converted to per 5 μm thickness (Ω·cm$^2$/5 μm);
R$_1$: electrical resistance per one piece of the polyolefin microporous membrane (Ω·cm$^2$);
T: film thickness of a polyolefin microporous membrane (μm).

(21) Foreign matter resistance

A tensile testing machine ("AUTOGRAPH" AGS-X, manufactured by Shimadzu Corporation), a 1.5 V capacitor, and a data logger were used to press an elementary battery at a speed of 0.3 mm/min, which comprised an anode, a polyolefin microporous membrane, a chromium ball with a diameter of 500 μm, a piece of aluminium foil arranged in the above order, and the displacement required for the battery to form a short circuit was measured. A sample that shows no short-circuit formation even after a larger amount of displacement has a higher level of foreign matter resistance, and the relationship between the displacement and the foreign matter resistance was evaluated according to the following four grade system:

A: a value of the displaced distance (mm) divided by the thickness of the separator ($\mu$m) was not less than 0.04;

B: a value of the displaced distance (mm) divided by the thickness of the separator ($\mu$m) was not less than 0.03 and less than 0.04;

C: a value of the displaced distance (mm) divided by the thickness of the separator ($\mu$m) was not less than 0.02 and less than 0.03;

D: a value of the displaced distance (mm) divided by the thickness of the separator ($\mu$m) was less than 0.020.

(22) Overcharge resistance characteristic

Test pieces with a diameter of 19 mm were cut out from a polyolefin microporous membrane in the atmosphere at a humidity of 30% $\pm$ 10%. One test piece and other materials as described in the above section (20) were placed in a coin cell battery case (CR2032 specification), and an electrolyte solution as described in the above section (20) was introduced thereto. A vacuum dryer was used to make the coin cell battery materials impregnated with the electrolyte solution at a gauge pressure of -50 kPa for one minute. Then, the semifinished coin cell battery was sealed with a crimping machine to produce a coin cell battery for evaluation.

The produced coin cell battery was heated from room temperature (25°C) to 180°C at a heating rate of 5°C/min in an incubator. The electrical resistance of the coin cell battery was measured at 25°C and 140°C with an impedance analyzer at a frequency of 200 kHz, and the increase in electrical resistance was calculated according to the formula below. A larger value of the increase in electrical resistance indicates a higher ability of the battery to avoid thermal runaway due to overcharging, and the overcharge resistance characteristic was evaluated according to the following four grade system:

$$\text{Increase in electrical resistance} = \text{electrical resistance at } 140°C \ / \ \text{electrical resistance}$$

$$\text{at } 25°C;$$

A: a more than 5,000-fold increase in electrical resistance was observed;

B: a 500-fold or more and less than 5,000-fold increase in electrical resistance was observed;

C: a 50-fold or more and less than 500-fold increase in electrical resistance was observed;

D: a less than 50-fold increase in electrical resistance was observed.

(23) Rate performance (Capacity maintenance rate at 15C)

To evaluate a polyolefin microporous membrane in terms of rate performance, the polyolefin microporous membrane as a separator was incorporated into a nonaqueous electrolyte liquid secondary battery comprising a cathode, an anode, the separator, and an electrolyte, and a charge and discharge test was performed.

A cathode comprising NMC532 (lithium nickel manganese cobalt oxide ($Li_{1.05}Ni_{0.50}Mn_{0.29}Co_{0.21}O_2$) material) deposited at a load of 9.5 mg/cm$^2$ on a piece of aluminium foil of 38 mm in width $\times$ 33 mm in length $\times$ 20 $\mu$m in thickness and an anode comprising natural graphite with a density of 1.45 g/cm$^3$ deposited at a mass per unit area of 5.5 mg/cm$^2$ on a piece of copper foil of 40 mm in width $\times$ 35 mm in length $\times$ 10 $\mu$m in thickness were used in the atmosphere at a humidity of 30% $\pm$ 10%. The cathode and the anode were dried in a vacuum oven at 120°C for use.

A polyolefin microporous membrane of 50 mm in length by 50 mm in width was dried in a vacuum oven at room temperature for use as the separator.

Vinylene carbonate (VC) and LiPF$_6$ were dissolved in a mixture of ethylene carbonate, ethyl methyl carbonate, and dimethyl carbonate (30/35/35 by volume) to prepare a solution containing VC at a concentration 0.5% by mass and LiPF$_6$ at a concentration of 1 mol/L as an electrolyte solution.

The cathode, the separator, and the anode were stacked to form a laminate, and the resulting laminate was placed in a plastic packaging bag, and the electrolyte solution was introduced into the resulting plastic packaging bag, and the plastic packaging bag was sealed under vacuum to produce a nonaqueous electrolyte liquid secondary battery.

The produced nonaqueous electrolyte liquid secondary battery was initially charged at 0.1C to 10 to 15% SoC at a temperature of 35°C and was left overnight (for a time period of 12 hours or longer) at 35°C for degassing. Then, the battery was charged to a voltage of 2.75 to 4.2 V at a charging rate of 0.1C by constant current-constant voltage (CC-CV) charging (terminated when the current reached 0.02C) and discharged at a constant current (CC) rate of 0.1C at a temperature of 35°C. Then, the battery was charged to a voltage of 2.75 to 4.2 V at a charging rate of 0.2C by CC-CV charging (terminated when the current reached 0.05C) and discharged at a CC rate of 0.2C three times in total at a temperature of 35°C, which was defined as the initial state of the nonaqueous electrolyte liquid secondary battery.

Next, the battery was charged to a voltage of 2.75 to 4.2 V at a charging rate of 0.2C by CC-CV charging (terminated when the current reached 0.05C) and discharged at a CC rate of 0.2C at a temperature of 35°C, and the discharge capacity was defined as equal to 0.2C capacity. Then, the battery was charged to a voltage of 2.75 to 4.2 V at a charging rate of 0.5C by CC-CV charging (terminated when the current reached 0.05C) at a temperature of 35°C, and the nonaqueous electrolyte liquid secondary battery was examined at 35°C by 15C (306 mA, 24.48 mA/cm$^2$) rate testing. The capacity maintenance rate was calculated according to the formula below, and the rate performance was evaluated according to the following five grade system:

$$\text{Capacity maintenance rate (\%)} = (\text{capacity at 15C / capacity at 0.2C}) \times 100;$$

A: the capacity maintenance rate was not less than 73%;
B: the capacity maintenance rate was not less than 69% and less than 73%;
C: the capacity maintenance rate was not less than 65% and less than 69%;
D: the capacity maintenance rate was not less than 61% and less than 65%;
E: the capacity maintenance rate was less than 61%.

[Example 1]

(Preparation of a mixture)

A mixture was prepared by blending 100 parts by mass of a polyolefin-based resin comprising 60% by mass of a high-density polyethylene polymer (HDPE) with a weight-average molecular weight (Mw) of $8.0 \times 10^5$ (density: 0.950 g/cm$^3$, melting point: 133.5°C) and 40% by mass of an ultra-high-molecular-weight polyethylene polymer (UHMwPE) with a Mw of $2.0 \times 10^6$ with 0.2 parts by mass of tetrakis[methylene-3-(3,5-di-*tert*-butyl-4-hydroxyphenyl)-propionate]methane as an antioxidant.

(Preparation of a polyolefin-based resin solution)

Into a high-power twin screw extruder (inner diameter: 58 mm, L/D: 42), 25 parts by mass of the mixture were introduced, and 75 parts by mass of liquid paraffin (with a viscosity of 35 cSt at 40°C) were fed into the twin screw extruder from the side feeder, and the resulting mixture was melt-kneaded at 180°C and at a revolution of 200 rpm to prepare a polyolefin-based resin solution.

(Formation of a gel sheet)

The polyolefin-based resin solution was passed through a filter to remove any foreign matter and was then fed into a T-shaped die from the twin screw extruder, and a molded body extruded from the T-shaped die was drawn at a speed of 5 m/min and cooled on a chill roll adjusted at 30°C to form a gel sheet.

(Stretching)

The gel sheet was stretched in both MD and TD directions at 115°C with a tenter type stretching machine by simultaneous biaxial stretching to a draw ratio of 9.

(Washing and Drying)

The stretched gel sheet was anchored to an aluminium frame with a size of 30 cm × 30 cm, immersed in a methylene chloride bath adjusted at 25°C for 10 minutes with shaking at 100 rpm to remove the liquid paraffin, and then air-dried at room temperature to obtain a dried membrane.

(Heat treatment)

The dried membrane was heat set at 125°C for 10 minutes to obtain a polyolefin microporous membrane.
The obtained polyolefin microporous membrane was 6 μm in thickness. The blending ratio of constituting components, production conditions, evaluation results, and the like are presented in Table 1.

[Example 2]

A polyolefin microporous membrane of 7 μm in thickness was obtained in the same manner as in Example 1, except that the thickness of a molded body extruded during the gel sheet forming process was adjusted for the present example and the draw ratio in both MD and TD directions was changed to 7 in the simultaneous biaxial stretching process.

[Example 3]

(Preparation of a mixture)

A mixture was prepared by blending 100 parts by mass of a polyolefin-based resin comprising 100% by mass of an UHMwPE (melting point: 125°C) with a Mw of $1.45 \times 10^6$ with 0.2 parts by mass of the same antioxidant as used in Example 1.

(Preparation of a polyolefin-based resin solution)

Into a high-power twin screw extruder (inner diameter: 58 mm, L/D: 42), 20 parts by mass of the mixture were introduced, and 80 parts by mass of the same liquid paraffin as used in Example 1 were introduced into the twin screw extruder from the side feeder, and the resulting mixture was melt-kneaded at 180°C and at a revolution of 200 rpm to prepare a polyolefin-based resin solution.

(Formation of a gel sheet)

A gel sheet was formed in the same manner as in Example 1, except that the resulting polyolefin-based resin solution was used and the thickness of the molded body extruded was adjusted for the present example.

(Stretching)

The gel sheet was stretched in both MD and TD directions at 110°C with a tenter type stretching machine by simultaneous biaxial stretching to a draw ratio of 9.

(Washing and Drying)

The washing and drying processes were performed in the same manner as in Example 1 to obtain a dried membrane, except that the stretched gel sheet obtained in the above step was used.

(Heat treatment)

The dried membrane was heat set at 115°C for 10 minutes to obtain a polyolefin microporous membrane.
The obtained polyolefin microporous membrane was 5 μm in thickness. The blending ratio of constituting components, production conditions, evaluation results, and the like are presented in Table 1.

[Example 4]

(Preparation of a mixture)

A mixture was prepared by blending 100 parts by mass of a polyolefin-based resin comprising 60% by mass of the HDPE (density: 0.950 g/cm$^3$, melting point: 133.5°C) with a Mw of $8.0 \times 10^5$ and 40% by mass of an UHMwPE (melting point: 136°C) with a Mw of $1.5 \times 10^6$ with 0.2 parts by mass of the same antioxidant as used in Example 1.

(Preparation of a polyolefin-based resin solution)

Into a high-power twin screw extruder (inner diameter: 58 mm, L/D: 42), 25 parts by mass of the mixture were introduced, and 75 parts by mass of the same liquid paraffin as used in Example 1 were introduced into the twin screw extruder from the side feeder, and the resulting mixture was melt-kneaded at 180°C and at a revolution of 200 rpm to prepare a polyolefin-based resin solution.

(Formation of a gel sheet)

A gel sheet was formed in the same manner as in Example 1, except that the resulting polyolefin-based resin solution was used and the thickness of the molded body extruded was adjusted for the present example.

(Stretching)

The simultaneous biaxial stretching was performed in the same manner as in Example 1, except that the above gel sheet was used.

(Washing and Drying)

The washing and drying processes were performed in the same manner as in Example 1 to obtain a dried membrane, except that the stretched gel sheet obtained in the above step was used.

(Heat treatment)

The dried membrane was heat set at 125°C for 10 minutes to obtain a polyolefin microporous membrane.
The obtained polyolefin microporous membrane was 7 $\mu$m in thickness. The blending ratio of constituting components, production conditions, evaluation results, and the like are presented in Table 1.

[Example 5]

A polyolefin microporous membrane of 6 $\mu$m in thickness was obtained in the same manner as in Example 1, except that the thickness of a molded body extruded during the gel sheet forming process was adjusted for the present example and the stretching temperature was changed to 110°C in the stretching process.

[Example 6]

(Preparation of a mixture)

A mixture was prepared by blending 100 parts by mass of a polyolefin-based resin comprising 100% by mass of the HDPE (density: 0.950 g/cm$^3$, melting point: 133.5°C) with a Mw of $8.0 \times 10^5$ with 0.2 parts by mass of the same antioxidant as used in Example 1.

(Preparation of a polyolefin-based resin solution)

Into a high-power twin screw extruder (inner diameter: 58 mm, L/D: 42), 30 parts by mass of the mixture were introduced, and 70 parts by mass of the same liquid paraffin as used in Example 1 were introduced into the twin screw extruder from the side feeder, and the resulting mixture was melt-kneaded at 180°C and at a revolution of 200 rpm to prepare a polyolefin-based resin solution.

(Formation of a gel sheet)

A gel sheet was formed in the same manner as in Example 1, except that the resulting polyolefin-based resin solution was used and the thickness of the molded body extruded was adjusted for the present example.

(Stretching)

The gel sheet was stretched in both MD and TD directions at 115°C with a tenter type stretching machine by simultaneous biaxial stretching to a draw ratio of 7.

(Washing and Drying)

The washing and drying processes were performed in the same manner as in Example 1 to obtain a dried membrane, except that the stretched gel sheet obtained in the above step was used.

(Heat treatment)

The dried membrane was heat set at 125°C for 10 minutes to obtain a polyolefin microporous membrane.
The obtained polyolefin microporous membrane was 9 μm in thickness. The blending ratio of constituting components, production conditions, evaluation results, and the like are presented in Table 2.

[Example 7]

(Preparation of a mixture)

A mixture was prepared by blending 100 parts by mass of a polyolefin-based resin comprising 60% by mass of the HDPE (density: 0.950 g/cm$^3$, melting point: 133.5°C) with a Mw of $8.0 \times 10^5$ and 40% by mass of an UHMwPE (melting point: 135°C) with a Mw of $1.5 \times 10^6$ with 0.2 parts by mass of the same antioxidant as used in Example 1.

(Preparation of a polyolefin-based resin solution)

Into a high-power twin screw extruder (inner diameter: 58 mm, L/D: 42), 25 parts by mass of the mixture were introduced, and 75 parts by mass of the same liquid paraffin as used in Example 1 were introduced into the twin screw extruder from the side feeder, and the resulting mixture was melt-kneaded at 180°C and at a revolution of 200 rpm to prepare a polyolefin-based resin solution.

(Formation of a gel sheet)

A gel sheet was formed in the same manner as in Example 1, except that the resulting polyolefin-based resin solution was used and the thickness of the molded body extruded was adjusted for the present example.

(Stretching)

The gel sheet was stretched in the MD direction at 115°C with a roller drawing machine to a draw ratio of 6.0 and then stretched in the TD direction at 125°C with a tenter type stretching machine to a draw ratio of 8 (sequential biaxial stretching).

(Washing and Drying)

The washing and drying processes were performed in the same manner as in Example 1 to obtain a dried membrane, except that the stretched gel sheet obtained in the above step was used.

(Redrawing)

The dried membrane was again stretched in the TD direction at a stretching temperature of 132.0°C in a tentering machine to a draw ratio of 1.6 and was then relaxed by thermal relaxation to obtain a polyolefin microporous membrane.
The obtained polyolefin microporous membrane was 9 μm in thickness. The blending ratio of constituting components, production conditions, evaluation results, and the like are presented in Table 2.

[Comparative Example 1]

(Preparation of a mixture)

A mixture was prepared by blending 100 parts by mass of a polyolefin-based resin comprising 60% by mass of a HDPE (density: 0.955 g/cm$^3$, melting point: 135°C) with a Mw of $3.5 \times 10^5$ and 40% by mass of an UHMwPE with a Mw of $2.0 \times 10^6$ with 0.2 parts by mass of the same antioxidant as used in Example 1.

(Preparation of a polyolefin-based resin solution)

Into a high-power twin screw extruder (inner diameter: 58 mm, L/D: 42), 25 parts by mass of the mixture were introduced, and 75 parts by mass of the same liquid paraffin as used in Example 1 were introduced into the twin screw extruder from the side feeder, and the resulting mixture was melt-kneaded at 180°C and at a revolution of 200 rpm to prepare a polyolefin-based resin solution.

(Formation of a gel sheet)

A gel sheet was formed in the same manner as in Example 1, except that the resulting polyolefin-based resin solution was used and the thickness of the molded body extruded was adjusted for the present example.

(Stretching)

The gel sheet was stretched in both MD and TD directions at 115°C with a tenter type stretching machine by simultaneous biaxial stretching to a draw ratio of 5.

(Washing and Drying)

The washing and drying processes were performed in the same manner as in Example 1 to obtain a dried membrane, except that the stretched gel sheet obtained in the above step was used.

(Heat treatment)

The dried membrane was heat set at 125°C for 10 minutes to obtain a polyolefin microporous membrane.
The obtained polyolefin microporous membrane was 9 $\mu$m in thickness. The blending ratio of constituting components, production conditions, evaluation results, and the like are presented in Table 2.

[Comparative Example 2]

A polyolefin microporous membrane of 10 $\mu$m in thickness was obtained in the same manner as in Comparative Example 1, except that the thickness of a molded body extruded during the gel sheet forming process was adjusted for the present example and the draw ratio in both MD and TD directions for simultaneous biaxial stretching was changed to 10 in the stretching process.

[Comparative Example 3]

(Preparation of a mixture)

A mixture was prepared by blending 100 parts by mass of a polyolefin-based resin comprising 100% by mass of a HDPE (density: 0.953 g/cm$^3$, melting point: 132°C) with a Mw of $1.8 \times 10^5$ with 0.2 parts by mass of the same antioxidant as used in Example 1.

(Preparation of a polyolefin-based resin solution)

Into a high-power twin screw extruder (inner diameter: 58 mm, L/D: 42), 40 parts by mass of the mixture were introduced, and 60 parts by mass of the same liquid paraffin as used in Example 1 were introduced into the twin screw extruder from the side feeder, and the resulting mixture was melt-kneaded at 180°C and at a revolution of 200 rpm to prepare a polyolefin-based resin solution.

(Formation of a gel sheet)

A gel sheet was formed in the same manner as in Example 1, except that the resulting polyolefin-based resin solution was used and the thickness of the molded body extruded was adjusted for the present example.

(Stretching)

The simultaneous biaxial stretching was performed in the same manner as in Example 1, except that the above gel sheet was used.

(Washing and Drying)

The washing and drying processes were performed in the same manner as in Example 1 to obtain a dried membrane, except that the stretched gel sheet obtained in the above step was used.

(Heat treatment)

The dried membrane was heat set at 120°C for 10 minutes to obtain a polyolefin microporous membrane.
The obtained polyolefin microporous membrane was 5 μm in thickness. The blending ratio of constituting components, production conditions, evaluation results, and the like are presented in Table 3.

[Comparative Example 4]

A polyolefin microporous membrane of 10 μm in thickness was obtained in the same manner as in Example 3, except that the thickness of a molded body extruded during the gel sheet forming process was adjusted for the present example and the draw ratio in both MD and TD directions for simultaneous biaxial stretching was changed to 5 in the stretching process.

[Comparative Example 5]

(Preparation of a mixture)

A mixture was prepared by blending 100 parts by mass of a polyolefin-based resin comprising 100% by mass of an UHMwPE (density: 0.955 g/cm$^3$, melting point: 136°C) with a Mw of $1.5 \times 10^6$ with 0.2 parts by mass of the same antioxidant as used in Example 1.

(Preparation of a polyolefin-based resin solution)

Into a high-power twin screw extruder (inner diameter: 58 mm, L/D: 42), 21 parts by mass of the mixture were introduced, and 79 parts by mass of the same liquid paraffin as used in Example 1 were introduced into the twin screw extruder from the side feeder, and the resulting mixture was melt-kneaded at 180°C and at a revolution of 200 rpm to prepare a polyolefin-based resin solution.

(Formation of a gel sheet)

A gel sheet was formed in the same manner as in Example 1, except that the resulting polyolefin-based resin solution was used and the thickness of the molded body extruded was adjusted for the present example.

(Stretching)

The simultaneous biaxial stretching was performed in the same manner as in Example 1, except that the above gel sheet was used.

(Washing and Drying)

The washing and drying processes were performed in the same manner as in Example 1 to obtain a dried membrane, except that the stretched gel sheet obtained in the above step was used.

(Heat treatment)

The dried membrane was heat set at 125°C for 10 minutes to obtain a polyolefin microporous membrane.
The obtained polyolefin microporous membrane was 7 μm in thickness. The blending ratio of constituting components, production conditions, evaluation results, and the like are presented in Table 3.

[Table 1]

| | | | | Example 1 | Example 2 | Example 3 | Example 4 |
|---|---|---|---|---|---|---|---|
| Raw Materials and Composition | HDPE | mass ratio | % | 60 | 60 | - | 60 |
| | | melting point | °C | 133.5 | 133.5 | - | 133.5 |
| | | Mw | - | $8.0 \times 10^5$ | $8.0 \times 10^5$ | - | $8.0 \times 10^5$ |
| | | H | % | 3.2 | 3.2 | - | 3.2 |
| | UHMwPE | mass ratio | % | 40 | 40 | 100 | 40 |
| | | melting point | °C | 133.5 | 133.5 | 125.1 | 136.0 |
| | | Mw | - | $2.4 \times 10^6$ | $2.4 \times 10^6$ | $1.45 \times 10^6$ | $1.5 \times 10^6$ |
| | | H | % | 4.4 | 4.4 | 4.3 | 6.2 |
| | Plasticizer | mass ratio | % | 75 | 75 | 80 | 75 |
| Gel Sheet (unstretched) | | melting point | °C | 123.4 | 123.4 | 118.4 | 125.3 |
| Stretching Condition | | MD draw ratio | times | 9 | 7 | 9 | 9 |
| | | TD draw ratio | times | 9 | 7 | 9 | 9 |
| Redrawing Condition | | TD draw ratio | times | - | - | - | - |
| Microporous | Limiting viscosity | | dL/g | 5.6 | 5.6 | 6.0 | 5.1 |

(continued)

| | | | | Example 1 | Example 2 | Example 3 | Example 4 |
|---|---|---|---|---|---|---|---|
| Membrane Properties | Ratio of materials with a molecular weight of 350,000 or lower | % | | 47 | 47 | 34 | 49 |
| | Ratio of materials with a molecular weight of 900,000 or higher | % | | 35 | 35 | 45 | 33 |
| | Film thickness | $\mu$m | | 6 | 7 | 5 | 7 |
| | Porosity | % | | 39 | 38 | 35 | 40 |
| | Average pore size | nm | | 22 | 21 | 15 | 24 |
| | BP pore size | nm | | 30 | 32 | 23 | 33 |
| | Air resistance/5 $\mu$m | sec/5 $\mu$m | | 105 | 110 | 100 | 95 |
| | $Tm_L$ | °C | | 122.0 | 122.1 | 118.7 | 123.0 |
| | $Tm_1$ | °C | | 136.5 | 136.5 | 133.1 | 137.3 |
| | $Tm_2$ | °C | | 137.4 | 137.2 | 131.2 | 137.2 |
| | $\Delta Tm$ | °C | | -0.9 | -0.7 | 1.9 | 0.1 |
| | S | % | | 21 | 16 | 13 | 26 |
| | Iave | - | | 3.2 | 3.0 | 3.0 | 3.3 |
| | Puncture strength/5 $\mu$m | N/5 $\mu$m | | 2.5 | 2.2 | 2.6 | 2.6 |
| | Shutdown temperature | °C | | 134.5 | 133.4 | 131.0 | 135.0 |
| | $R_2$ | $\Omega \cdot cm^2/5 \, \mu$m | | 0.35 | 0.45 | 0.50 | 0.40 |
| Battery Properties | Foreign matter resistance | - | | A | B | A | A |
| | Overcharge resistance characteristic | - | | A | A | A | A |
| | Rate performance | - | | A | B | C | B |

[Table 2]

| | | | | Example 5 | Example 6 | Example 7 | Comparative Example 1 |
|---|---|---|---|---|---|---|---|
| Raw Materials and Composition | HDPE | mass ratio | % | 60 | 100 | 60 | 60 |
| | | melting point | °C | 133.5 | 133.5 | 133.5 | 135.2 |
| | | Mw | - | $8.0 \times 10^5$ | $8.0 \times 10^5$ | $8.0 \times 10^5$ | $3.5 \times 10^5$ |
| | | H | % | 3.2 | 3.2 | 3.2 | 5.5 |
| | UHMwPE | mass ratio | % | 40 | - | 40 | 40 |
| | | melting point | °C | 133.5 | - | 135.2 | 133.5 |

(continued)

|  |  |  |  | Example 5 | Example 6 | Example 7 | Comparative Example 1 |
|---|---|---|---|---|---|---|---|
|  |  | Mw | - | $2.4 \times 10^6$ | - | $1.5 \times 10^6$ | $2.4 \times 10^6$ |
|  |  | H | % | 4.4 | - | 4.8 | 4.4 |
|  | Plasticizer | mass ratio | % | 75 | 70 | 75 | 75 |
| Gel Sheet (unstretched) |  | melting point | °C | 123.4 | 124.8 | 125.3 | 128.4 |
| Stretching Condition |  | MD draw ratio | times | 9 | 7 | 6 | 5 |
|  |  | TD draw ratio | times | 9 | 7 | 8 | 5 |
| Redrawing Condition |  | TD draw ratio | times | - | - | 1.6 | - |
| Microporous Membrane Properties | Limiting viscosity |  | dL/g | 5.6 | 3.5 | 5.1 | 5.4 |
|  | Ratio of materials with a molecular weight of 350,000 or lower |  | % | 47 | 63 | 49 | 54 |
|  | Ratio of materials with a molecular weight of 900,000 or higher |  | % | 35 | 19 | 34 | 28 |
|  | Film thickness |  | μm | 6 | 9 | 9 | 9 |
|  | Porosity |  | % | 39 | 39 | 38 | 39 |
|  | Average pore size |  | nm | 21 | 24 | 29 | 26 |
|  | BP pore size |  | nm | 29 | 36 | 43 | 44 |
|  | Air resistance/5 μm | sec/5 μm | 120 | 125 | 95 | 87 |  |
|  | $Tm_L$ | °C | 122.2 | 122.6 | 122.9 | 124.2 |  |
|  | $Tm_1$ | °C | 137.4 | 135.8 | 138.1 | 136.6 |  |
|  | $Tm_2$ | °C | 137.5 | 135.9 | 137.5 | 137.6 |  |
|  | $\Delta Tm$ | °C | -0.1 | -0.1 | 0.6 | -1.0 |  |
|  | S | % | 32 | 7 | 37 | 14 |  |
|  | lave | - | 3.4 | 3.0 | 3.3 | 2.8 |  |
|  | Puncture strength/5 μm | N/5 μm | 2.9 | 1.6 | 2.6 | 1.4 |  |
|  | Shutdown temperature | °C | 136.7 | 131.3 | 138.3 | 136.0 |  |
|  | $R_2$ | $\Omega \cdot cm^2/5$ μm | 0.50 | 0.50 | 0.50 | 0.60 |  |

(continued)

|  |  |  |  | Example 5 | Example 6 | Example 7 | Comparative Example 1 |
|---|---|---|---|---|---|---|---|
| Battery Properties | Foreign matter resistance | - | A | C | A | D |  |
|  | Overcharge resistance characteristic | - | B | A | C | B |  |
|  | Rate performance | - | B | C | B | D |  |

[Table 3]

| | | | | Comparative Example 2 | Comparative Example 3 | Comparative Example 4 | Comparative Example 5 |
|---|---|---|---|---|---|---|---|
| Raw Materials and Composition | HDPE | mass ratio | % | 60 | 100 | - | - |
| | | melting point | °C | 135.2 | 133.1 | - | - |
| | | Mw | - | $3.5 \times 10^5$ | $1.8 \times 10^5$ | - | - |
| | | H | % | 5.5 | 3.8 | - | - |
| | UHMwPE | mass ratio | % | 40 | - | 100 | 100 |
| | | melting point | °C | 133.5 | - | 125.1 | 136 |
| | | Mw | - | $2.4 \times 10^6$ | - | $1.4 \times 10^6$ | $1.5 \times 10^6$ |
| | | H | % | 4.4 | - | 4.3 | 6.2 |
| | Plasticizer | mass ratio | % | 75 | 60 | 80 | 79 |
| Gel Sheet (unstretched) | | melting point | °C | 128.4 | 125.4 | 118.4 | 127.4 |
| Stretching Condition | | MD draw ratio | times | 10 | 9 | 5 | 9 |
| | | TD draw ratio | times | 10 | 9 | 5 | 9 |
| Redrawing Condition | | TD draw ratio | times | - | - | - | - |
| Microporous | Limiting viscosity | | dL/g | 5.4 | 2.2 | 6 | 6.3 |

| | | | Comparative Example 2 | Comparative Example 3 | Comparative Example 4 | Comparative Example 5 |
|---|---|---|---|---|---|---|
| Membrane Properties | Ratio of materials with a molecular weight of 350,000 or lower | % | 54 | 77 | 34 | 40 |
| | Ratio of materials with a molecular weight of 900,000 or higher | % | 28 | 9 | 45 | 35 |
| | Film thickness | μm | 10 | 5 | 10 | 7 |
| | Porosity | % | 40 | 39 | 33 | 43 |
| | Average pore size | nm | 23 | 18 | 15 | 26 |
| | BP pore size | nm | 32 | 29 | 31 | 37 |
| | Air resistance/5 μm | sec/5 μm | 91 | 120 | 230 | 80 |
| | $Tm_L$ | °C | 124.2 | 122.7 | 118.7 | 125.5 |
| | $Tm_1$ | °C | 137.7 | 132.7 | 130.7 | 140.4 |
| | $Tm_2$ | °C | 138.9 | 134.6 | 129 | 138.1 |
| | $\Delta Tm$ | °C | -1.2 | -1.9 | 1.7 | 2.3 |
| | S | % | 41 | 3 | 3 | 46 |
| | Iave | - | 3.5 | 3.3 | 2.5 | 3.5 |
| | Puncture strength/5 μm | N/5 μm | 2.7 | 1.4 | 1.3 | 3.1 |
| | Shutdown temperature | °C | 140.0 | 130.0 | 129.4 | 143.6 |
| | $R_2$ | $\Omega \cdot cm^2/5\ \mu m$ | 0.40 | 0.60 | 1.60 | 0.40 |
| Battery Properties | Foreign matter resistance | - | A | D | D | A |
| | Overcharge resistance characteristic | - | D | A | A | D |
| | Rate performance | - | B | D | E | B |

EP 4 001 348 A1

29

The polyolefin microporous membranes of Examples 1 to 7 demonstrated a low-temperature shutdown feature as well as excellent electrical resistance and superior puncture strength as battery separators and were indicated to maintain a better balance among the mechanical strength, the electrical resistance, and the shutdown feature. Moreover, in the evaluation of battery properties, the polyolefin microporous membranes of Examples 1 to 7 also demonstrated a good balance among the foreign matter resistance, the overcharge resistance characteristic, and the rate performance and were indicated to provide both excellent safety and high output performance when used as battery separators.

In contrast, the polyolefin microporous membranes of Comparative Examples 1 to 5 demonstrated deterioration in at least one of the battery separator properties and were indicated a poor balance among the mechanical strength, the electrical resistance, and the shutdown feature. Moreover, the polyolefin microporous membranes of Comparative Examples 1 to 5 demonstrated deterioration in at least one of the battery properties and were indicated to have an unbalance in those properties.

While the present invention has been described in detail with reference to specific embodiments, it will be obvious to those skilled in the art that various changes and modifications of the invention can be made without departing from the spirit and scope thereof.

Industrial Applicability

The polyolefin microporous membrane of the invention has high mechanical strength, excellent electrical resistance, and a superior shutdown feature, as well as provides excellent safety and high output performance when used as a battery separator. Accordingly, the polyolefin microporous membrane of the invention can be suitably used as a separator for secondary batteries, which have an increased capacity and require the separator to have a thinner thickness.

**Claims**

1. A polyolefin microporous membrane showing an average degree of in-plane molecular orientation of not less than 2.9 when analyzed by Raman spectroscopy and exhibiting a melting peak(s) occurring at a temperature of not lower than 140°C, which occupies not less than 5% and not more than 40% of the area of all the melting peak(s), when measured on a differential scanning calorimeter (DSC).

2. The polyolefin microporous membrane according to claim 1, wherein the polyolefin microporous membrane has a limiting viscosity of not less than 3.0 dL/g.

3. The polyolefin microporous membrane according to claim 1 or 2, wherein the peak top temperature $Tm_2$ is observed at not higher than 137.5°C in the melting curve during the second heating step by a differential scanning calorimeter (DSC).

4. The polyolefin microporous membrane according to any one of claims 1 to 3, which is measured to have an average pore size of not less than 15 nm and a bubble point pore size of not less than 20 nm by using a palm porometer according to JIS K 3832-1990.

5. The polyolefin microporous membrane according to any one of claims 1 to 4, which shows an air resistance of not more than 200 seconds per 5 $\mu$m thickness when a volume of 100 cm$^3$ of air is passed through the polyolefin microporous membrane to measure the air resistance by the Oken-type tester method according to JIS P-8117: 2009.

6. The polyolefin microporous membrane according to any one of claims 1 to 5, wherein the fraction of polyethylene molecules with a molecular weight of not more than $3.5 \times 10^5$ accounts for less than 50% by mass according to the molecular mass distribution of polyethylene components in the polyolefin microporous membrane.

7. The polyolefin microporous membrane according to any one of claims 1 to 6, wherein the peak top temperature $Tm_1$ is observed at not lower than 130°C and not higher than 140°C in the melting curve during the first heating step by a differential scanning calorimeter (DSC), and wherein the difference between the $Tm_1$ and the $Tm_2$, $\Delta Tm$ (= $Tm_1$ - $Tm_2$), is greater than -1.0°C and not greater than 2.0°C.

8. The polyolefin microporous membrane according to any one of claims 1 to 7, wherein the fraction of polyethylene molecules with a molecular weight of not less than $9.0 \times 10^5$ accounts for not less than 30% by mass according to the molecular mass distribution of polyethylene components in the polyolefin microporous membrane.

9. The polyolefin microporous membrane according to any one of claims 1 to 8, wherein the peak top temperature $Tm_L$ is observed at not higher than 124°C in the melting curve during the second heating step by a differential scanning calorimeter (DSC) when liquid paraffin is contained in the polyolefin microporous membrane.

10. A battery separator in which the polyolefin microporous membrane according to any one of claims 1 to 9 is used.

11. A secondary battery in which the battery separator according to claim 10 is used.

Europäisches
Patentamt

European
Patent Office

Office européen
des brevets

## EUROPEAN SEARCH REPORT

Application Number

EP 21 20 8152

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 750 216 A1 (TORAY BATTERY SEPARATOR FILM [JP]) 2 July 2014 (2014-07-02) * paragraphs [0001], [0085]; examples * ----- | 1-11 | INV. C08J5/18 H01M10/42 H01M50/417 |
| A | WO 2020/203901 A1 (TORAY INDUSTRIES [JP]) 8 October 2020 (2020-10-08) * paragraphs [0001], [0002], [0016], [0097]; examples * ----- | 1-11 | H01M50/489 H01M50/491 |

TECHNICAL FIELDS
SEARCHED      (IPC)

C08J
H01M

The present search report has been drawn up for all claims

| Place of search | Date of completion of the search | Examiner |
|---|---|---|
| Munich | 5 April 2022 | Pamies Olle, Silvia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 20 8152

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2022

| Patent document cited in search report | | Publication date | Patent family member(s) | | Publication date |
|---|---|---|---|---|---|
| EP 2750216 | A1 | 02-07-2014 | CN | 104823304 A | 05-08-2015 |
| | | | EP | 2750216 A1 | 02-07-2014 |
| | | | JP | 5296917 B1 | 25-09-2013 |
| | | | JP | 2014102882 A | 05-06-2014 |
| | | | KR | 101378051 B1 | 27-03-2014 |
| | | | US | 2014315065 A1 | 23-10-2014 |
| | | | WO | 2014076994 A1 | 22-05-2014 |
| WO 2020203901 | A1 | 08-10-2020 | CN | 113631644 A | 09-11-2021 |
| | | | EP | 3950795 A1 | 09-02-2022 |
| | | | JP | WO2020203901 A1 | 08-10-2020 |
| | | | KR | 20210148119 A | 07-12-2021 |
| | | | WO | 2020203901 A1 | 08-10-2020 |

EPO FORM P0459

For more details about this annex : see Official Journal of the European Patent Office, No. 12/82

**EP 4 001 348 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009108323 A
- JP 2000204188 A